# EUROPEAN PATENT SPECIFICATION

(11) **EP 2 440 497 B1**
(45) Date of publication and mention of the grant of the patent: **23.07.2014**
(21) Application number: 10786435.7
(22) Date of filing: 09.06.2010
(51) Int. Cl.: C02F 1/32, C02F 1/72, C02F 103/00, C02F 1/00

(54) **SYSTEM AND DEVICE FOR TREATMENT OF WATER**
SYSTEM UND VORRICHTUNG ZUR BEHANDLUNG VON WASSER
SYSTÈME ET DISPOSITIF POUR TRAITEMENT DE L'EAU

(30) Priority: 09.06.2009 SE 0950433
(43) Date of publication of application: 18.04.2012
(73) Proprietor: AlfaWall Aktiebolag, 147 41 Tumba (SE)
(72) Inventor: MARKSTEDT, Johan, S-123 56 Farsta (SE); BORIN, Per, S-122 41 ENSKEDE (SE); BERG, Magnus, S-128 69 Sköndal (SE)
(74) Representative: Alfa Laval Attorneys
(86) International application number: PCT/SE2010/000159
(87) International publication number: WO 2010/144018

(56) References cited:
- WO-A1-95/01307
- WO-A1-95/01307
- WO-A2-2008/039147
- WO-A2-2008/039147
- CN-Y- 2 668 605
- US-A- 5 124 131
- US-A1- 2005 023 482
- US-A1- 2005 023 482
- US-B1- 6 610 990
- US-B1- 6 610 990

## Description

The present invention relates to a device and a system for treatment of water and in particular for treatment of ballast water in ships.

### THE INVENTION

The access to clean water is a precondition for life and a major issue in the world today. This relates to both fresh water as well as salt water.

The fresh water sources in many areas of the world are limited and many times polluted with microorganisms including amoebas, parasites and bacteria, such as legionella. Not just drinking water (or tap water) place rather high demands on clean fresh water. Many other areas, such as process industries as well as pool and spa facilities, need treatment systems for improving the water quality. Traditionally, water has been purified using chemicals (such as chlorine), but this is expensive and entails risks for the staff who handle them. Furthermore, such chemicals may entail a major burden on the environment and may also cause health problems to people exposed to them.

Furthermore - when it comes to salt or sea water - invasive species transported in ballast water pose an enormous environmental threat. Ships are arranged with ballast water tanks that are filled in order to stabilize them when the ships are not fully loaded with cargo. When ships take on ballast water, they take on more than water. Microscopic organisms, eggs, cysts and even planktonic larvae of larger organisms are small enough to pass through the intakes and pumps. If these organisms survive transport to other parts of the globe, their impact can be devastating. In seas that are weakened by overfishing and pollution, non-native species can reproduce quickly and deprive local species of food and living space. Besides the risk of disrupting natural ecosystems, such invasions can jeopardize local economies and even human health, and their effects are usually irreversible. For this reason, the International Maritime Organization (IMO) has recently adopted a convention requiring that merchant vessels introduce a system for ballast water treatment.

Many systems have been developed for treating water in general and in recent years there has also been a significant development within the area of ballast water treatment. One such, chemical-free, system for treating ballast water is described in WO 2008/039147 A1. This system includes a water treatment device comprising UV lamps and a stack of plates with catalytic (photocatalytic) properties. These catalysts are utilized in combination with UV light, whereby a broad spectrum of organic and inorganic substances is rendered harmless more effectively than with conventional UV technology. This water treatment device is partly included and improved by the present invention. The UV lamps and the catalysts are enclosed in a treatment chamber of a housing, which comprises an inlet and outlet for ballast water. The inlet and outlet of the housing are both formed with mounting flanges for connecting the device to piping in the ballast water treatment system. This piping is obviously used for conducting ballast water to and from the ships ballast water tanks.

The water treatment device could however also be connected through piping to a cleaning unit comprising cleaning media, which is used to flush the device during a cleaning operation for instance in the ballast water application. Furthermore, the water treatment device could be connected through piping to a cooling flow system for cooling the lamps in the treatment chamber of the housing. The UV lamps require some time to start and produce a lot of heat in operation so they have to be cooled during start. In this phase there is a cooling problem especially in the ballast water application since the lamps cannot be cooled properly by the ballast water to be treated because they do not operate properly during the start-phase, and the ballast water will thus not be sufficiently treated. It is thus necessary to have a cooling fluid flow through the treatment chamber during this phase. This cooling fluid may constitute ordinary sea water from the area where the ship at the moment is located, which sea water however is pumped over board after the cooling operation. Hence, this sea water used for cooling will not end up in the ballast water tanks as ballast water.

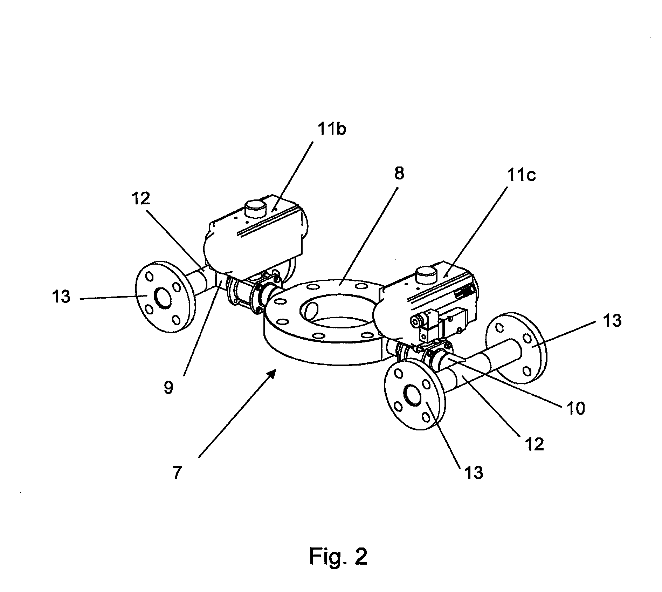

The known water treatment device is therefore provided with a so called cross tubing member (see fig. 2), which is adapted to be mounted between the water treatment device and the piping in the ballast water treatment system. The cross tubing member is arranged to connect the water treatment device to piping associated with the cleaning unit and the cooling flow system. The cross tubing member comprises a ring shaped portion, which is adapted to be mounted to the flanges at the inlet and the outlet of the water treatment device. This ring shaped portion is furthermore adapted to be connected to a main piping for conducting ballast water through the device. This main piping is arranged and dimensioned for a flow of ballast water to and from the ships ballast water tanks. The cross tubing member further comprises two pipes (provided with valves) extending from an outer circumference side of the ring shaped portion. These pipes of the cross tubing member are arranged to connect the water treatment device to piping associated with the cleaning unit and the cooling flow system, whereby the valves of the cross tubing member regulate the flow of cleaning media and cooling fluid through the water treatment device. These valves are closed shut during normal operation of the device, i.e. during treatment of ballast water. However, the main piping is also provided with valves, which are closed shut during the cleaning or cooling operation of the device. These valves are also closed shut when the treatment device is not in operation.

The known treatment device with cross tubing member provides a simple and effective solution for connecting the device to the different flow circuits, as the above mentioned cooling-, cleaning- and main water treatment-piping in the water treatment system. However, the accessible installation space, especially onboard ships, of the water treatment system is very limited. Furthermore, it would be advantageous to further simplify the installation of the water treatment system.

Accordingly, the present invention presents a solution to the above mentioned problems by providing an improved water treatment device and water treatment system. This object is achieved by the device according to claim 1. Hence, the device comprises a housing having an inlet for water to be treated in a treatment chamber formed inside the housing, the treatment chamber comprising UV radiating means. The housing further comprises an outlet for the water from the treatment chamber. The invention is characterized in that the housing is formed with a first port at the inlet and a further first port at the outlet, said first ports being integrated with the housing and arranged for connection to a circuit for supplying cleaning media to the treatment chamber, wherein said first ports are arranged to be connectable to piping of the cleaning media circuit and to conduct cleaning media through the treatment chamber.

Such a device provides improved installation characteristics in that it will exhibit a reduced size or length and also fewer installation parts compared to the known device with the cross tubing member.

The first port could include a conduit member extending from the housing and having a free end adapted for mounting a valve to regulate the flow of cooling fluid or cleaning media or a combination flow of cooling and cleaning media. The conduit member could also comprise a pipe with a free end in the form of a mounting flange for the valve.

According to the present invention the inlet and the outlet of the device could be provided with a main valve for regulating the flow of water through the treatment chamber. The valve could be a butterfly valve comprising a valve disc for regulating the flow of fluid. The valve disc could comprise a coating of polymer material such as ECTFE material, i.e. an ethylene-chlorotrifluoroethylene material also known as HALAR^{®}.

The inlet, the treatment chamber and the outlet could be arranged in a straight through-flow configuration for the water to be treated. The housing could also be formed with a second port at the outlet, said second port being integrated with the housing and arranged for connection to a circuit for supplying cooling fluid to the treatment chamber, wherein said second port is arranged to conduct cooling fluid from the treatment chamber, and the water inlet being arranged to serve as an inlet for cooling fluid. The housing with said inlet, said treatment chamber with UV radiating means and the outlet could be adapted for the treatment of ballast water.

The present invention also relates to a system for treating water comprising at least one device for treatment of water according to the present invention, wherein the inlet and the outlet of each device is connected to a main piping for conducting the water to be treated through the treatment chamber of each device, said device being further connected through said first ports to the piping of the cleaning media circuit comprising a cleaning unit for supplying cleaning media through the cleaning media circuit and the treatment chamber of the device during a cleaning operation. The housing of each device in the system could be formed with a second port at the outlet, said second port being integrated with the housing and connected to piping of a cooling fluid circuit for supplying cooling fluid through the treatment chamber, said second port being connected to the piping of the cooling fluid circuit for conducting cooling fluid from the treatment chamber, wherein the water inlet of each device is connected to a cooling fluid source, through the main piping, for supplying cooling fluid to the treatment chamber of each device during a cooling operation.

In the system according to the present invention the cooling fluid source could be provided on a branched pipe section of the main piping connected to the inlet, said branched pipe section comprising a cooling fluid valve, which is arranged to close off the branched pipe section during a water treatment operation and to regulate the flow of cooling fluid into the main piping connected to the inlet of each device during a cooling operation.

A central water valve could be arranged on the main piping upstream of the branched pipe section, wherein the central water valve is arranged to cut of this upstream part of the main piping during the cooling operation. The system according to the present invention could further comprise several treatment devices connected in parallel through the piping of the water treatment system. The system could be adapted for the treatment of ballast water of a ship.

The present invention relates further to a use of the device of the invention for the treatment of ballast water. The present invention relates also to a use of the system of the invention for the treatment of ballast water.

In the following, the invention will be explained by the use of Figures 1 to 5. The figures are for the purpose of demonstrating the invention and are not intended to limit its scope.

### BRIEF DESCRIPTION OF THE DRAWINGS

Fig. 1 shows a known device,
Fig. 2 shows a cross tubing member of the known device,
Fig. 3 shows a device according to an embodiment of the invention,
Fig. 4 shows the embodiment according to Fig. 3 provided with valves,
Fig. 5 shows an embodiment of a ballast water treatment system.

### DETAILED DESCRIPTION OF THE DRAWINGS

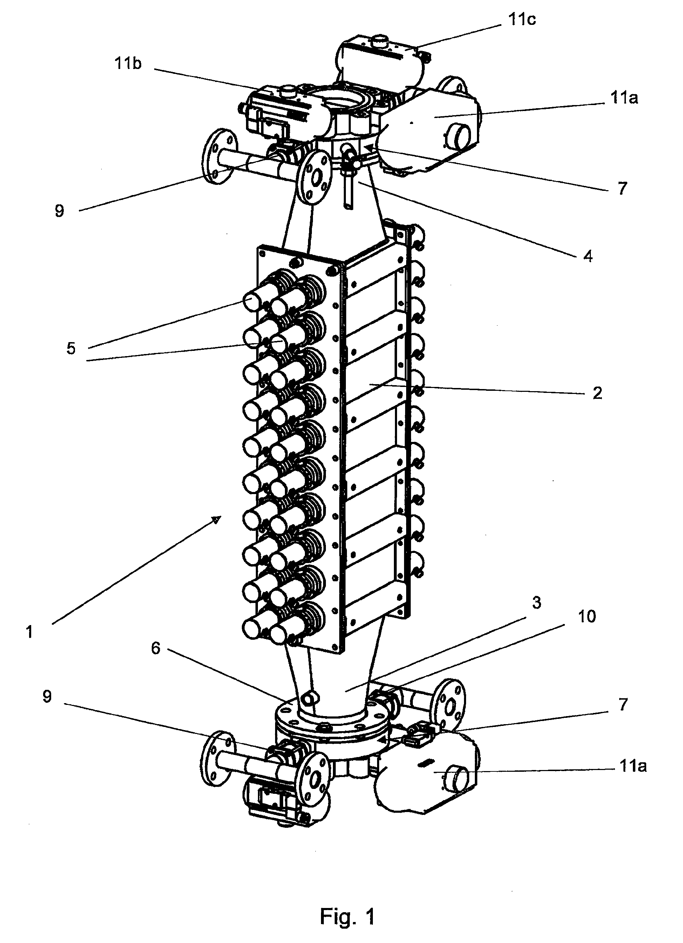

Fig. 1 shows a previously known ballast water treatment device 1. The water treatment device comprises a housing 2 with an inlet 3 and outlet 4 for ballast water. The housing 2 encloses a treatment chamber comprising UV lamps 5 and a stack of plates (not shown) with catalytic properties. These catalysts are utilized in combination with UV light, whereby a broad spectrum of organic and inorganic substances in the ballast water is rendered harmless. The inlet 3 and outlet 4 of the housing 2 are both formed with mounting flanges 6 for connecting the device to piping (not shown) in the ballast water treatment system. Both the inlet 3 and the outlet 4 of the water treatment device 1 is provided with a so called cross tubing member 7, which is adapted to be mounted between the water treatment device 1 and the piping in the ballast water treatment system.

The cross tubing member 7 is therefore arranged to be connected to the mounting flanges 6 at the inlet 3 and the outlet 4 of the housing 2, which cross tubing member 7 is furthermore connectable to a main valve 11a and a main piping (not shown) for the flow of ballast water through the device (to and from the ships ballast water tanks). The flow of ballast water through the device is controlled through said two main valves 11a, which are arranged at the inlet 3 and the outlet 4 between the main piping and the cross tubing member 7. Furthermore, the cross tubing member 7 is arranged to connect the water treatment device 1 to piping associated with a cleaning unit (not shown) and a cooling flow system (not shown). For this purpose, each cross tubing member 7 comprises two pipes 9 and 10. A first pipe 9 of the cross tubing member 7 is arranged to conduct cleaning media through the treatment chamber of the device 1. A second pipe 10 of the cross tubing member 7 is arranged to conduct cooling fluid through said treatment chamber of device 1. A first valve 11b is arranged on the first pipe 9 to regulate the flow of cleaning media through the treatment chamber. A second valve 11c is arranged on the second pipe 10 to regulate the flow of cooling fluid through the treatment chamber. These valves 11 b and 11 c are closed shut during normal operation of the device, i.e. during treatment of ballast water, while one of the valves 11 b and 11 c is open for a cleaning or cooling operation respectively. During the cleaning and cooling operations of the treatment chamber, the main valves 11 a are closed shut to cut off the flow of ballast water through the device and furthermore to cut off a flow of cleaning media or cooling fluid through the main piping of the ballast water treatment system.

Fig. 2 shows the cross tubing member 7 in isolation. The cross tubing member 7 comprises a ring shaped portion 8, which is adapted to be mounted to the flanges 6 at the inlet 3 and the outlet 4 of the water treatment device 1. This ring shaped portion 8 is furthermore adapted to connect the device 1 to the main valve 11 a and the main piping for conducting ballast water through the treatment chamber of the device 1. As can be seen the two pipes 9 and 10 of the cross tubing member extend from an outside circumference side of the ring shaped portion 8. As previously stated, the first pipe 9 is arranged to conduct cleaning media and the second pipe 10 is arranged to conduct cooling fluid through the treatment chamber of device 1. As can be seen, each of the first and second pipes 9 and 10 form a conduit extending through the ring shaped portion 8, wherein said first valve 11 b is arranged to regulate the flow of cleaning media and said second valve 11c is arranged to regulate the flow of cooling fluid in the conduits and through the treatment chamber of the water treatment device 1. The end of each pipe 9 and 10 has a branched pipe section 12 comprising mounting flanges 13. In this case several treatment devices 1 can be interconnected in parallel with each other. This is achieved through said mounting flanges 13 being mounted to pipe sections forming a common inlet and outlet line for cleaning media and cooling fluid respectively for several treatment devices. Consequently, a single cleaning media unit and cooling fluid source can be used for several treatment devices 1.

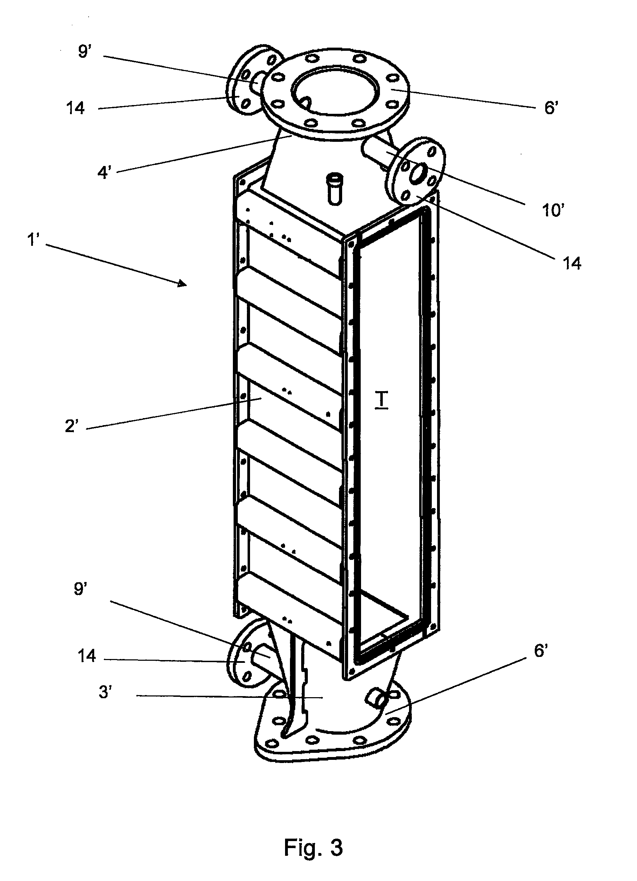

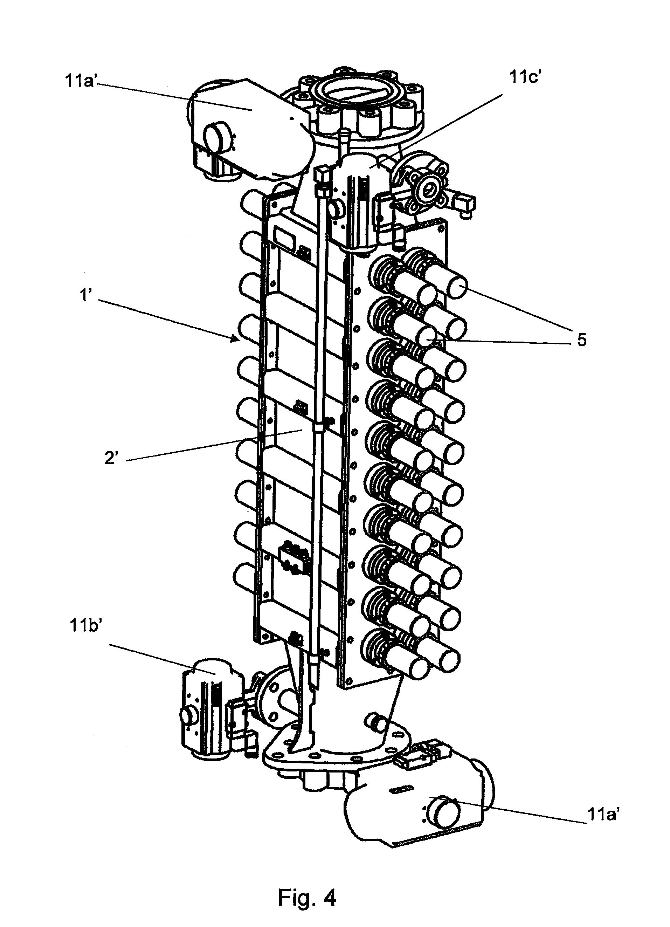

Fig. 3 shows a water treatment device 1' according to an embodiment of the invention. This water treatment device 1' comprises a housing 2' with an inlet 3' and outlet 4' for ballast water. The housing 2' is arranged with a treatment chamber T, which encloses UV lamps (not shown) and a stack of plates (not shown) with catalytic properties in accordance with the known water treatment device. The inlet 3' and outlet 4' of the housing 2' are both formed with mounting flanges 6' for connecting the treatment device 1' to a main valve 11a' (see Fig. 4) and a main piping (not shown).

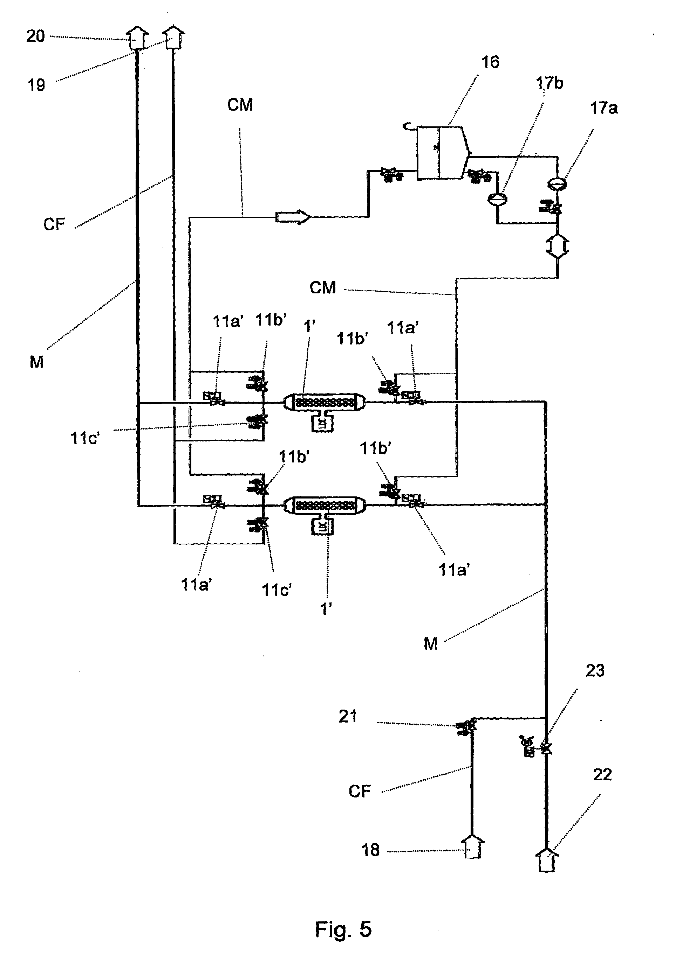

As can be seen, there are three integrated ports in the form of pipes 9' and 10' extending from the housing 2' and forming conduits for conducting cleaning media and cooling fluid through the treatment chamber T of the device 1'. Consequently, this treatment device 1' does not need the previously described cross tubing member 7. Instead, a first and second pipe 9' and 10' is integrated with the housing 2' at the outlet 4'. A further first pipe 9' is integrated with the housing 2' at the inlet 3'. As in the known device, the first pipes 9' at the inlet 3' and outlet 4' are arranged to conduct cleaning media through the treatment chamber T of device 1'. The second pipe 10' at the outlet 4' is arranged to conduct cooling fluid from the treatment chamber of the device 1'. The pipes 9' and 10' are formed with mounting flanges 14, which are arranged for connection of valves 11b' and 11c' (see Fig. 4) to regulate the flow through the pipes and the treatment chamber T of each treatment device 1'. However, instead of arranging a second pipe 10' and valve 11c' for cooling fluid at the inlet 3' of the treatment device 1', the ballast water treatment system (see Fig. 5) is arranged to conduct a cooling fluid through the main piping M and the inlet 3' of the treatment device 1'. In this case the main piping M is provided with a branched pipe section (forming a cooling fluid pipe CF) connected to a cooling fluid source 18. This branched pipe section or cooling fluid pipe CF is provided with a cooling fluid valve 21 for regulating the flow of cooling fluid into the main piping M connected to the inlets 3' of the treatment devices 1'. Consequently, if several treatment devices 1' are connected to the main piping M, there is one common cooling fluid valve 21 for the supply of cooling fluid to all of the treatment devices 1' through the main piping M.

Fig. 4 shows the above described embodiment provided with the valves 11 a', 11 b' and 11 c' for regulating the flow through the treatment chamber T. This treatment device 1' is provided with lamps 5 and a stack of catalytic plates (not shown) as the previously known treatment device. The flow of ballast water through the treatment device 1' is regulated through the two main valves 11a', which are mounted to the flanges 6' at the inlet 3' and outlet 4' of the treatment device 1'. The main valves 11 a' are arranged to be connected to the main piping M for conducting ballast water through the treatment device 1'.

The first and the second pipe 9' and 10' is provided with a first and second valve 11 b' and 11c' respectively. The first valves 11 b' on the first pipes 9' are arranged to regulate the flow of cleaning media through the treatment chamber T. The second valve 11c' on the second pipe 10' is arranged to regulate the flow of cooling fluid from the treatment chamber T.

The first and second valves 11 b' and 11c' are closed shut during normal operation of the device 1', i.e. during treatment of ballast water, wherein the main valves 11a' are open. The main valves 11a' are however closed shut when the treatment device 1' is turned off (when not treating ballast water) or during a cleaning operation of the treatment chamber 1'.

During the cleaning operation, the first valve 11 b' on the first pipe 9' at the inlet 3' and the outlet 4' of the housing 2' is arranged to regulate the flow of cleaning media through the treatment chamber T. The first valves 11b' are arranged to be connected to a cleaning unit 16 (see Fig. 5) through a cleaning media piping CM.

During a cooling operation, the main valve 11a' at the outlet 4' is closed shut. However, the main valve 11a' at the inlet 3' and the second valve 11c' on the second pipe 10' at the outlet 4' are open. A cooling fluid valve 21 on a branched cooling fluid pipe section is arranged to regulate the feed of cooling fluid through the main piping M and into the inlet 3' of the treatment device 1' (see Fig. 5). Hence, both the main valve 11a' at the inlet 3' and the cooling fluid valve 21 is arranged to regulate the flow of cooling fluid into the treatment chamber T of the device 1'. The second valve 11 c' on the second pipe 10' at the outlet 4' is arranged to regulate the flow of cooling fluid out of the treatment chamber T. This second pipe 10' and valve 11 c' at the outlet 4' is arranged to be connected to a cooling fluid piping CF, wherein the cooling fluid is discharged over board 19, i.e. from the ship (see Fig. 5).

Fig. 5 shows an embodiment of a ballast water treatment system according to the invention. The system comprises two water treatment devices 1', according to Fig. 4, which devices 1' are interconnected (in parallel) through the piping of the ballast water treatment system. The treatment devices 1' comprises said valves, i.e. the main valves 11a' connected to a main piping M, the first valves 11b' connected to a cleaning media piping CM and the second valves 11c' connected to a cooling fluid piping CF.

The main piping M is arranged to conduct ballast water from a ballast water intake 22 of the ship, to the treatment devices 1' and further to the ballast water tanks 20 of the ship. The flow of ballast water through each treatment device 1' is regulated through the two main valves 11a'. The valves 11 b', 11 c' and 21 associated with the cleaning and cooling operation of the treatment device are closed shut during this ballast water treatment operation.

The ballast water treatment system further comprises a cleaning unit 16 (containing cleaning media) connected to the cleaning media piping CM and the treatment devices 1'. During a cleaning operation, the main valves 11a' are closed shut. In this case, the first valves 11 b' of the treatment device 1' are open to regulate the flow of cleaning media through the treatment chamber T and the cleaning media piping CM. The cleaning unit 16 comprises a first pump 17a for pumping cleaning media from the cleaning unit 16 - through the treatment chamber - and back again to the cleaning unit 16. Consequently, the cleaning media piping CM forms a closed circuit for the cleaning media. Hence, the same cleaning media contained in the cleaning unit 16 can be used several times for cleaning the treatment chambers T of the devices 1'. The cleaning unit 16 also comprises a second pump 17b for draining the treatment chamber T of cleaning fluid left after the cleaning operation is finished. Hence, the remaining cleaning fluid in the treatment chamber T is thereby pumped back to the cleaning unit 16.

The ballast water treatment system comprises, as mentioned in connection with Fig. 3, a main piping with a branched pipe section (forming a cooling fluid pipe CF), which is connected to a cooling fluid source 18. This branched pipe section or cooling fluid pipe CF is provided with a cooling fluid valve 21 for regulating the flow of cooling fluid into the main piping M connected to the inlets 3' of the treatment devices 1'. Hence, this embodiment of the ballast water treatment system is arranged to conduct a cooling fluid through the main piping M and the inlet 3' of the treatment device 1'. Consequently, there is one common cooling fluid source 18 and cooling fluid valve 21 for the supply of cooling fluid to all of the treatment devices 1' connected to the main piping M. The main valve 11a' at the inlet 3' of the treatment device 1' is arranged to regulate to flow of cooling fluid into the treatment chamber T. The second valve 11 c' on the second pipe 10' at the outlet 4' of the treatment device 1' is arranged to regulate the flow of cooling fluid out of the treatment chamber T. This second pipe 10' and valve 11c' at the outlet 4' is connected to a cooling fluid piping CF, wherein the cooling fluid is discharged over board 19, i.e. from the ship. Consequently, the cooling fluid piping CF forms an open circuit, in that the cooling fluid is discharged over board 19 after it's been conducted through the treatment devices 1'. In this case, the cooling fluid source can be water taken directly from the sea, lake or river outside of the ship. The cooling fluid source could also be a fresh water source onboard the ship.

During a de-ballasting operation, i.e. when the ship empties its ballast water tanks, the ballast water treatment system may be arranged to pump the ballast water directly over board. However, the system may of course also be arranged to reverse the flow of ballast water in the main piping, whereby the ballast water from the tanks 22 is conducted once again through the treatment chamber T of the devices 1' before it's discharged over board. In this case the previously described outlet 4' of the treatment device 1' will serve as an inlet and vice versa.

## Claims

1. A device (1') for treatment of water comprising a housing (2') having an inlet (3') for water to be treated in a treatment chamber (T) formed inside the housing (2'), the treatment chamber (T) comprising UV radiating means (5), and the housing (2') having an outlet (4') for the water from the treatment chamber (T), **characterized in that** the housing (2') is formed with a first port (9') at the inlet (3') and a further first port (9') at the outlet (4'), said first ports (9') being integrated with the housing (2') and arranged for connection to a circuit for supplying cleaning media (CM) to the treatment chamber (T), wherein said first ports (9') are arranged to be connectable to piping (CM) of the cleaning media circuit and to conduct cleaning media through the treatment chamber (T).

2. A device according to claim 1, wherein the first port (9') includes a conduit member extending from the housing and has a free end adapted for mounting a valve (11 b') to regulate the flow of cleaning media.

3. A device according to claim 2, wherein the conduit member is a pipe (9') with a free end in the form of a mounting flange (14) for the valve (11b').

4. A device according to any one of the preceding claims, wherein the first port (9') comprises a valve (11b') to regulate the flow of cleaning media.

5. A device according to any one of the preceding claims, wherein the inlet (3') and outlet (4') of the device (1') is provided with a main valve (11a') for regulating the flow of water through the treatment chamber (T).

6. A device according to claim 4 or 5, wherein the valve (11a', 11b') is a butterfly valve comprising a valve disc for regulating the flow of fluid.

7. A device according to claim 6, wherein the butterfly valve disc comprises a coating of polymer material.

8. A device according to claim 7, wherein the polymer coating comprises an ECTFE material.

9. A device according to any one of the preceding claims, wherein the inlet (3'), the treatment chamber (T) and the outlet (4') are arranged in a straight through-flow configuration for the water to be treated.

10. A device according to any one of the preceding claims, wherein the housing (2') is formed with a second port (10') at the outlet (4'), said second port (10') being integrated with the housing (2') and arranged for connection to a circuit for supplying cooling fluid (CF) to the treatment chamber (T), wherein said second port (10') is arranged to conduct cooling fluid from the treatment chamber (T), and the water inlet (3') being arranged to serve as an inlet for cooling fluid.

11. A system for treating water comprising at least one device (1') for treatment of water according to any one of the preceding claims, wherein the inlet (3') and the outlet (4') of each device (1') is connected to a main piping (M) for conducting the water to be treated through the treatment chamber (T) of each device (1'), said device (1') being further connected through said first ports (9') to the piping of the cleaning media circuit (CM) comprising a cleaning unit (16) for supplying cleaning media through the cleaning media circuit (CM) and the treatment chamber (T) of the device (1') during a cleaning operation.

12. A system according to claim 11, wherein the housing (2') of each device (1') is formed with a second port (10') at the outlet (4'), said second port (10') being integrated with the housing (2') and connected to piping of a cooling fluid circuit (CF) for supplying cooling fluid through the treatment chamber (1), said second port (10') being connected to the piping of the cooling fluid circuit (CF) for conducting cooling fluid from the treatment chamber (T), wherein the water inlet (3') of each device (1') is connected to a cooling fluid source (18), through the main piping (M), for supplying cooling fluid to the treatment chamber of each device (1') during a cooling operation.

13. A system according to claim 12, wherein the cooling fluid source (18) is provided on a branched pipe section (CF) of the main piping (M) connected to the inlet (3'), said branched pipe section (CF) comprising a cooling fluid valve (21), which is arranged to close off the branched pipe section during a water treatment operation and to regulate the flow of cooling fluid into the main piping (M) connected to the inlet (3') of each device (1') during a cooling operation.

14. A system according to claim 13, wherein a central water valve (23) is arranged on the main piping (M) upstream of the branched pipe section (CF), wherein the central water valve (23) is arranged to cut of this upstream part of the main piping (M) during the cooling operation.

15. A system according to any one of claims 11-14, comprising several treatment devices (1') connected in parallel through the piping (M, CM, CF) of the water treatment system.

16. A system according to any one of claims 11-15, wherein the system is adapted for the treatment of ballast water of a ship.

17. Use of the device according to any one of claims 1 -10 for the treatment of ballast water.

18. Use of the system according to any one of claims 11-16 for the treatment of ballast water.

## Patentansprüche

1. Vorrichtung (1') zur Behandlung von Wasser, die ein Gehäuse (2') mit einem Einlass (3') für Wasser umfasst, das in einer Behandlungskammer (T) behandelt werden soll, die in dem Gehäuse (2') ausgebildet ist, wobei die Behandlungskammer (T) UV-Strahlungsmittel (5) umfasst und das Gehäuse (2') einen Auslass (4') für das Wasser aus der Behandlungskammer (T) aufweist, **dadurch gekennzeichnet, dass** das Gehäuse (2') mit einem ersten Kanal (9') am Einlass (3') und einem weiteren ersten Kanal (9') am Auslass (4') ausgebildet ist, wobei die ersten Kanäle (9') in das Gehäuse (2') integriert und so angeordnet sind, dass sie an einen Kreislauf zum Zuführen von Reinigungsmitteln (CM) zur Behandlungskammer (T) angeschlossen werden, wobei die ersten Kanäle (9') so angeordnet sind, dass sie an Rohrleitungen (CM) des Reinigungsmittelkreislaufs anschließbar sind und dass sie Reinigungsmittel durch die Behandlungskammer (T) leiten.

2. Vorrichtung nach Anspruch 1, wobei der erste Kanal (9') ein Röhrenelement aufweist, das von dem Gehäuse aus verläuft, und ein freies Ende aufweist, das zum Anbringen eines Ventils (11b') zum Regulieren des Durchflusses von Reinigungsmitteln ausgelegt ist.

3. Vorrichtung nach Anspruch 2, wobei es sich bei dem Röhrenelement um ein Rohr (9') mit einem freien Ende in Form eines Montageflanschs (14) für das Ventil (11 b') handelt.

4. Vorrichtung nach einem der vorhergehenden Ansprüche, wobei der erste Kanal (9') ein Ventil (11 b') zum Regulieren des Durchflusses von Reinigungsmitteln umfasst.

5. Vorrichtung nach einem der vorhergehenden Ansprüche, wobei der Einlass (3') und Auslass (4') der Vorrichtung (1') mit einem Hauptventil (11a') zum Regulieren des Durchflusses von Wasser durch die Behandlungskammer (T) versehen sind.

6. Vorrichtung nach Anspruch 4 oder 5, wobei es sich bei dem Ventil (11a', 11b') um eine Absperrklappe handelt, die eine Ventilscheibe zum Regulieren des Fluiddurchflusses umfasst.

7. Vorrichtung nach Anspruch 6, wobei die Scheibe der Absperrklappe eine Polymerwerkstoffbeschichtung umfasst.

8. Vorrichtung nach Anspruch 7, wobei die Polymerbeschichtung ein ECTFE-Material umfasst.

9. Vorrichtung nach einem der vorhergehenden Ansprüche, wobei der Einlass (3'), die Behandlungskammer (T) und der Auslass (4') in einer geraden Durchflussanordnung für das zu behandelnde Wasser angeordnet sind.

10. Vorrichtung nach einem der vorhergehenden Ansprüche, wobei das Gehäuse (2') mit einem zweiten Kanal (10') am Auslass (4') ausgebildet ist, wobei der zweite Kanal (10') in das Gehäuse (2') integriert ist und so angeordnet ist, dass er an einen Kreislauf zum Zuführen von Kühlmittel (CF) zur Behandlungskammer (T) angeschlossen wird, wobei der zweite Kanal (10') so angeordnet ist, dass er Kühlmittel aus der Behandlungskammer (T) leitet, und wobei der Wassereinlass (3') so angeordnet ist, dass er als Einlass für Kühlmittel dient.

11. System zur Behandlung von Wasser, das mindestens eine Vorrichtung (1') zur Behandlung von Wasser nach einem der vorhergehenden Ansprüche umfasst, wobei der Einlass (3') und der Auslass (4') jeder Vorrichtung (1') mit einer Hauptrohrleitung (M) zum Leiten des zu behandelnden Wassers durch die Behandlungskammer (T) jeder Vorrichtung (1') verbunden sind, wobei die Vorrichtung (1') ferner über die ersten Kanäle (9') mit den Rohrleitungen des Reinigungsmittelkreislaufs (CM), der eine Reinigungseinheit (16) umfasst, zum Leiten von Reinigungsmitteln durch den Reinigungsmittelkreislauf (CM) und die Behandlungskammer (T) der Vorrichtung (1') während eines Reinigungsvorgangs verbunden ist.

12. System nach Anspruch 11, wobei das Gehäuse (2') jeder Vorrichtung (1') mit einem zweiten Kanal (10') am Auslass (4') ausgebildet ist, wobei der zweite Kanal (10') in das Gehäuse (2') integriert und an Rohrleitungen eines Kühlmittelkreislaufs (CF) zum Leiten von Kühlmittel durch die Behandlungskammer (T) angeschlossen ist, wobei der zweite Kanal (10') an die Rohrleitungen des Kühlmittelkreislaufs (CF) zum Leiten von Kühlmittel aus der Behandlungskammer (T) angeschlossen ist, wobei der Wassereinlass (3') jeder Vorrichtung (1') durch die Hauptleitung (M) mit einer Kühlmittelquelle (18) verbunden ist, um während eines Kühlvorgangs der Behandlungskammer jeder Vorrichtung (1') Kühlmittel zuzuführen.

13. System nach Anspruch 12, wobei die Kühlmittelquelle (18) an einem verzweigten Rohrabschnitt (CF) der Hauptleitung (M) angeordnet ist, die mit dem Einlass (3') verbunden ist, wobei der verzweigte Rohrabschnitt (CF) ein Kühlmittelventil (21) umfasst, das so angeordnet ist, dass es den verzweigten Rohrabschnitt während eines Wasserbehandlungsvorgangs absperrt und den Strom von Kühlmittel in die Hauptleitung (M), die mit dem Einlass (3') jeder Vorrichtung (1') verbunden ist, während eines Kühlvorgangs reguliert.

14. System nach Anspruch 13, wobei ein zentrales Wasserventil (23) an der Hauptleitung (M) in Strömungsrichtung vor dem verzweigten Rohrabschnitt (CF) angeordnet ist, wobei das zentrale Wasserventil (23) so angeordnet ist, dass es diesen davor angeordneten Teil der Hauptleitung (M) während des Kühlvorgangs absperrt.

15. System nach einem der Ansprüche 11 bis 14, das mehrere Behandlungsvorrichtungen (1') umfasst, die durch die Rohrleitungen (M, CM, CF) des Wasserbehandlungssystems parallelgeschaltet sind.

16. System nach einem der Ansprüche 11 bis 15, wobei das System für die Behandlung von Ballastwasser eines Schiffs ausgelegt ist.

17. Verwendung der Vorrichtung nach einem der Ansprüche 1 bis 10 zur Behandlung von Ballastwasser.

18. Verwendung des Systems nach einem der Ansprüche 11 bis 16 zur Behandlung von Ballastwasser.

## Revendications

1. Dispositif (1') pour le traitement de l'eau comprenant un boîtier (2') présentant une entrée (3') pour de l'eau à traiter dans une chambre de traitement (T) formée à l'intérieur du boîtier (2'), la chambre de traitement (T) comprenant des moyens de rayonnement UV (5), et le boîtier (2') présentant une sortie (4') pour l'eau venant de la chambre de traitement (T), **caractérisé en ce que** le boîtier (2') est formé avec un premier passage (9') à l'entrée (3') et un autre premier passage (9') à la sortie (4'), lesdits premiers passages (9') étant intégrés au boîtier (2') et disposés pour le raccordement à un circuit pour alimenter des agents nettoyants (CM) dans la chambre de traitement (T), lesdits premiers passage (9') étant disposés pour pouvoir être raccordés à une tuyauterie (CM) du circuit d'agents nettoyants et pour guider des agents nettoyants à travers la chambre de traitement (T).

2. Dispositif selon la revendication 1, le premier passage (9') comportant un élément de conduit s'étendant depuis le boîtier et présentant une extrémité libre adaptée pour monter une vanne (11 b') pour réguler l'écoulement d'agents nettoyants.

3. Dispositif selon la revendication 2, l'élément de conduit étant un tuyau (9') avec une extrémité libre sous la forme d'une bride de montage (14) pour la vanne (11 b').

4. Dispositif selon l'une quelconque des revendications précédentes, le premier passage (9') comprenant une vanne (11b') pour réguler l'écoulement d'agents nettoyants.

5. Dispositif selon l'une quelconque des revendications précédentes, l'entrée (3') et la sortie (4') du dispositif (1') étant pourvues d'une vanne principale (11a') pour réguler l'écoulement d'eau à travers la chambre de traitement (T).

6. Dispositif selon la revendication 4 ou 5, la vanne (11a', 11b') étant une vanne papillon comprenant un obturateur de vanne pour réguler l'écoulement de fluide.

7. Dispositif selon la revendication 6, l'obturateur de vanne papillon comprenant un revêtement de matériau polymère.

8. Dispositif selon la revendication 7, ledit revêtement polymère comprenant un matériau ECTFE.

9. Dispositif selon l'une quelconque des revendications précédentes, l'entrée (3'), la chambre de traitement (T) et la sortie (4') étant disposées dans une configuration d'écoulement droite pour l'eau à traiter.

10. Dispositif selon l'une quelconque des revendications précédentes, le boîtier (2') étant formé avec un second passage (10') à la sortie (4'), ledit second passage (10') étant intégré au boîtier (2') et disposé pour le raccordement à un circuit pour alimenter du fluide de refroidissement (CF) dans la chambre de traitement (T), ledit second passage (10') étant disposé pour guider du fluide de refroidissement venant de la chambre de traitement (T), et l'entrée d'eau (3') étant disposée pour servir d'entrée pour du fluide de refroidissement.

11. Système pour le traitement de l'eau comprenant au moins un dispositif (1') pour le traitement de l'eau selon l'une quelconque des revendications précédentes, l'entrée (3') et la sortie (4') de chaque dispositif (1') étant raccordées à une tuyauterie principale (M) pour guider l'eau à traiter à travers la chambre de traitement (T) de chaque dispositif (1'), ledit dispositif (1') étant en outre raccordé par lesdits premiers passages (9') à la tuyauterie du circuit d'agents nettoyants (CM) comprenant une unité de nettoyage (16) pour faire circuler des agents nettoyants à travers le circuit d'agents nettoyants (CM) et la chambre de traitement (T) du dispositif (1') pendant une opération de nettoyage.

12. Système selon la revendication 11, le boîtier (2') de chaque dispositif (1') étant formé avec un second passage (10') à la sortie (4'), ledit second passage (10') étant intégré au boîtier (2') et raccordé à la tuyauterie d'un circuit de fluide de refroidissement (CF) pour faire circuler du fluide de refroidissement à travers la chambre de traitement (T), ledit second passage (10') étant raccordé à la tuyauterie du circuit de fluide de refroidissement (CF) pour guider du fluide de refroidissement venant de la chambre de traitement (T), l'entrée d'eau (3') de chaque dispositif (1') étant raccordée par la tuyauterie principale (M) à une source de fluide de refroidissement (18) pour alimenter du fluide de refroidissement dans la chambre de traitement de chaque dispositif (1') pendant une opération de refroidissement.

13. Système selon la revendication 12, la source de fluide de refroidissement (18) se trouvant sur une partie de tuyau ramifiée (CF) de la tuyauterie principale (M) raccordée à l'entrée (3'), ladite partie de tuyau ramifiée (CF) comprenant une vanne à fluide de refroidissement (21), qui est disposée pour fermer la partie de tuyau ramifiée pendant une opération de traitement de l'eau et pour réguler l'écoulement de fluide de refroidissement dans la tuyauterie principale (M) raccordée à l'entrée (3') de chaque dispositif (1') pendant une opération de refroidissement.

14. Système selon la revendication 13, une vanne centrale à eau (23) étant disposée sur la tuyauterie principale (M) en amont de la partie de tuyau ramifiée (CF), la vanne centrale à eau (23) étant disposée pour fermer cette partie amont de la tuyauterie principale (M) pendant l'opération de refroidissement.

15. Système selon l'une quelconque des revendications 11 à 14, comprenant plusieurs dispositifs de traitement (1') raccordés en parallèle par la tuyauterie (M, CM, CF) du système pour le traitement de l'eau.

16. Système selon l'une quelconque des revendications 11 à 15, le système étant adapté pour le traitement de l'eau de ballastage d'un navire.

17. Utilisation du dispositif selon l'une quelconque des revendications 1 à 10 pour le traitement d'eau de ballastage.

18. Utilisation du système selon l'une quelconque des revendications 11 à 16 pour le traitement d'eau de ballastage.
